# EUROPEAN PATENT SPECIFICATION

(11) **EP 1 754 617 B1**
(45) Date of publication and mention of the grant of the patent: **15.07.2009**
(21) Application number: 06118234.1
(22) Date of filing: 01.08.2006
(51) Int. Cl.: B60J 5/04, E05F 15/20

(54) **Transport vehicle on tyres, such as a bus or trolleybus**
Beförderungsfahrzeug mit Reifen, wie ein Omnibus oder Trolleybus
Véhicule de transport, notamment autobus ou trolleybus

(30) Priority: 17.08.2005 FR 0508585
(43) Date of publication of application: 21.02.2007
(73) Proprietor: Iveco France S.A., 69200 Vénissieux (FR)
(72) Inventor: Codron, Stéphane, 69008 Lyon (FR)
(74) Representative: Borsano, Corrado

(56) References cited:
- DE-C- 935 348
- GB-A- 1 346 050
- US-A- 2 249 273
- US-A- 5 255 952
- PATENT ABSTRACTS OF JAPAN vol. 006, no. 048 (M-119), 27 March 1982 (1982-03-27) -& JP 56 163914 A (KAWAJU SHATAI KOGYO KK), 16 December 1981 (1981-12-16)
- PATENT ABSTRACTS OF JAPAN vol. 2002, no. 11, 6 November 2002 (2002-11-06) -& JP 2002 205546 A (MITSUBISHI AUTOMOB ENG CO LTD; MITSUBISHI MOTORS CORP), 23 July 2002 (2002-07-23)

## Description

The present invention concerns a transport vehicle on tyres, such as a bus or trolleybus.

Traditionally, this type of transport vehicle includes a body, which is fitted onto at least one front axle, as well as at least one rear axle, each of which is equipped with at least two wheels. Several doors are also included, which are generally placed at the front, at the rear, and in the middle of the vehicle. When the vehicle stops at a bus stop, said doors are opened to let passengers get on and off.

This having been specified, this invention aims to propose a transport vehicle which is stationary for a limited length of time, so as to minimise the running costs and reduce the vehicle's energy consumption.

Document JP 05-6163914 discloses an example of such a vehicle.

For this purpose the object of this invention is a transport vehicle on tyres, such as a bus or trolleybus, which includes a body fitted onto at least one front axle, equipped with front wheels, as well as onto at least one rear axle, equipped with rear wheels, this vehicle also having at least one access door, which is able to form at least one access opening to the vehicle, where said acces door comprises a double door, consisting of a first wing, called large wing, as well as a second wing, called small wing, the large wing having a principal dimension, or length, greater than the principal dimension, or length, of the small wing; said vehicle also having a device for controlling the movement of said wings, so that each wing is able to selectively take on a closed position and an open position, characterised in that each wing can also assume at least one intermediate position, so that it can create various access openings of different sizes.

According to further characteristics of the invention:
- the double door is fitted next to the rear wheels, on the middle side of the vehicle, the small wing being turned towards the rear wheels;
- the large wing has at least two intermediate positions;
- the first intermediate position of the large wing corresponds to a movement equivalent to a quarter of the length of said large wing from its closed position, while the second intermediate position corresponds to a displacement equivalent to half the length of said large wing, from its closed position;
- the small wing has a single intermediate position;
- the intermediate position of the small wing corresponds to a displacement of half of the length of said small wing, from its closed position;
- the length of the large wing equals twice the length of the small wing;
- the length of the large wing is 1200 mm, while the length of the small wing is 600 mm;
- this transport vehicle possesses, in addition to said double door fitted near the rear wheels, a single front door, to be fitted near the front wheels, the vehicle not having a middle door.

The invention will be better understood and other advantages of said invention will become clearer in the light of the following description of an embodiment of a transport vehicle according to its principle, given purely by way of example and with reference to the annexed drawings, in which:
- figure 1 is a side view, illustrating a transport vehicle according to the invention;
- figure 2 is a side view, illustrating more precisely a double door, belonging to the transport vehicle in figure 1;
- figures 3 to 5 are side views similar to figure 2, illustrating three different positions of the two wings that form the double door shown in figure 2.

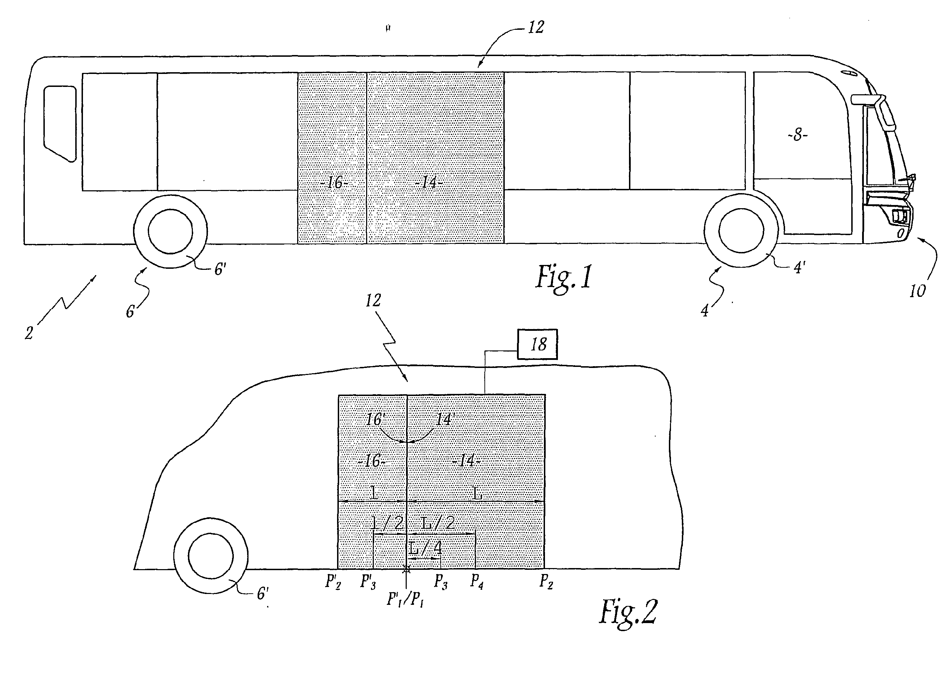

The transport vehicle illustrated in figure 1, which is a bus or a trolleybus, includes in a known manner a body 2, fitted onto a front axle 4, as well as a rear axle 6. These two axles 4 and 6 are equipped with tyres, numbered 4' and 6' respectively. The vehicle also has a front door 8, situated between the front wheel 4' and the front side 10 of the body 2. Lastly, a double door referred to as a whole by the number 12, which will be described in more detail below, is situated between the front and rear wheels, while being placed adjacent to the rear wheels 6'.

Figure 2 shows in more detail the double door 12, mentioned above. Said door is made up of two wings 14 and 16, each of which has a classic shape, in that notably it includes a peripheral frame as well as a pane of glass.

These two wings are asymmetrical, in that their lengths, referred to respectively as L and I, are different. In the example illustrated, the value of L is twice that of I, that is to say wing 14 is twice as long as wing 16. Henceforth they will be referred to respectively as large wing 14 and small wing 16.

By way of a non-limitative example, the length L of the large wing 14 measures, for example, 1200 mm, while that I of the small wing 16 measures 600 mm. In this respect, note that the value of 600 mm corresponds to the space necessary for a so-called "standard" passenger to move through.

As figure 1 shows in more detail, it should be noted that the small wing 16 is adjacent to the rear wheels 6', while the large wing 14 is turned towards the front wheels 4'. These two wings 14 and 16 open, for example, in a sliding outwards-opening manner, generally known per se.

Figure 2 illustrates the different positions that wings 14 and 16 are likely to adopt, thanks to the activation of the control device 18, shown schematically, which are of a type generally know per se. The positions of the large wing 14, marked P₁ and

P₄, correspond to the positioning of its inner edge 14', which is in this case its left edge in said figure 2.

Position P₁ corresponds to a closed position of said wing 14, in which it is situated as close as possible to the small wing. Moreover, position P₂ corresponds to a completely open position, at a distance of L from the closed position. Lastly, two intermediate positions are provided for, marked P₃ and P₄, which correspond to movements with values of L/4 and U2 respectively, in relation to the closed position P₁.

In a manner similar to that described above, the different positions that the inner edge 16' of the small wing 16 is able to adopt are marked P'₁ to P'₃. Positions P'₁ and P'₂ respectively are the closed and open positions of said wing 16. Moreover, an intermediate position is provided for, marked P'₃ , which is a middle position in that it corresponds to a movement of I/2 of wing 16, in relation to its closed P'₁ or open P'₂ positions.

The use of the transport vehicle described above, and more particularly of its double back door 12, will now be explained below.

First it is necessary to determine at the outset the volume of passengers that are likely to get on the vehicle, as well as get off it, when it stops at a particular scheduled stop. In order to do this, various approaches may be taken.

Firstly, it is possible for the driver himself to make this estimate, in particular by doing so visually. It is also possible to take into account the number of times the passengers press on a button in order to signal that they are about to get off. Finally, it is also possible to determine the aforesaid volume by means of a numerical calculator, according to the number of passenges previously at the same stop at the same times of day.

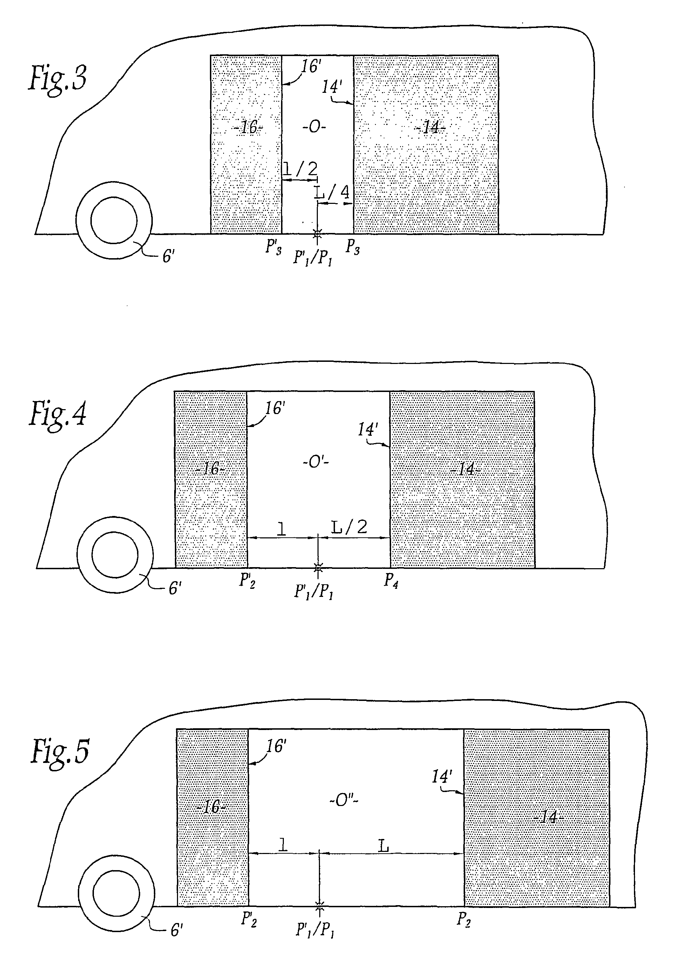

If it is estimated that the number of passengers likely to pass through the double door 12 is low, the two wings 14 and 16 can be moved by activating the controls 18, so as to delimit a reduced opening O. Said opening O, illustrated in figure 3, thus allows access for just one passenger, as it has, in the example described above, a width of 600 mm.

In this respect, the large wing 14 is placed in its intermediate position P₃, while the small wing 16 is placed in its intermediate position P'₃. In other words, the large wing 14 has been moved by a distance of L/4 in relation to its closed position P₁, while the small wing 16 has been moved by a distance of I/2 in relation to its closed position P'₁.

By way of a variation, it could also be possible to move just one wing 14 or 16 to delimit said opening O. Thus, the large wing 14 can be moved by a distance of L/2, whereas the small wing 16 can be moved by a distance of I.

However, it will be noted that it is advantageous to simultaneously move both wings 14 and 16, as the time needed for this manoeuvre is less than that needed to move just one wing. In other words, it is quicker to move both wings by a value of I/2, that is to say L/4, than to move just one of the wings at twice the distance, i.e. L/2 or I.

If we estimate that the number of passengers that has to pass through the double door 12 is located within a normal range of values, we move the two wings so as to form an opening O', the dimensions of which are twice those of opening O.

In this case, said opening O, represented in figure 4, corresponds to an arrangement in which the small wing 16 is in its open position P'₂, whereas the large wing 14 is in its second intermediary position P₄. In other words, the small wing 16 has been moved by a value I in relation to its closed position P'₁, while wing 14 has been moved by a value L/2 in relation to its closed position P₁.

Said opening O', which in the example measures 1200 mm, corresponds to a standard access for two passengers, moving side by side. As a variation, it is also possible to form this opening O' by moving only the large wing 14 into its open position P₂, while the small wing 16 remains stationary. However, in the same way as mentioned previously, it is advantageous to move the two wings at the same time by a smaller distance, allowing the corresponding time of manoeuvre to be reduced.

Finally, if the number of passengers having to pass through the double door 12 is estimated to be very high, the two wings 14 and 16 are moved completely, so as to form an opening O". Said opening, which is the maximum size, namely 1800 mm in the example given, is illustrated in figure 5.

In this configuration, each wing 14 and 16 is in its open position of P₂ and P'₂ respectively, so as to allow three passengers to pass through, moving side by side.

In this respect, note that the distance between wing 16 and the rear wheels 6' is such that, in its open position, said small wing 16 does not come into contact with the rear wheels 6'. This prevents said wheels 6' from being obstructed, especially when they are guiding wheels.

The invention enables the aforementioned objectives to be achieved.

Indeed, given that the two wings that make up the double door are able to have at least one intermediate position, this gives a considerable modularity to the transport vehicle equipped with such a door. In such conditions, it is possible to manoeuvre the wings selectively, so that they form an opening which has dimensions appropriate to the volume of passengers at that moment. This therefore means that the time taken for the wings to move is reduced, particularly when they form a narrow opening, ensuring a substantial reduction in the running costs of the vehicle.

Moreover, the invention allows a reduction in heat loss, particularly when the wings form a narrow sized opening. As a result, given that heat exchanges with the exterior are reduced, the vehicle's energy consumption is lower, in terms of air conditioning and heating.

The asymmetrical nature of the two wings is also advantageous as it allows numerous possibilities of movement, so as to create openings of different sizes. Furthermore, thanks to this feature, it is possible to provide for the small wing to turn towards the rear wheel, so that said wing does not encroach upon the rows of seats that are at the back of the vehicle.

Lastly, note that the vehicle according to this invention can be equipped with a front door, as well as with a double rear door, without having to fit it with a middle door. This would therefore allow for the middle section of the vehicle to be exploited, and used as a platform for example.

## Claims

1. Transport vehicle on tyres, such as a bus or trolleybus, comprising a vehicle body (2) provided of at least one front axle (4) having front wheels (4'), and at least one rear axle (6) having rear wheels (6'), the vehicle further comprising at least one access door (8, 12), for forming at least one opening (O, O', O") for the access to the vehicle, where
said access door comprises a double door (12) including a first wing (14) and a second wing (16) smaller than said first wing (14), the large wing (14) having a main dimension or length (L) greater than the main dimension or length (l) of said small wing (16), and where it further comprises a device (18) to control the movement of said first and second wings (14, 16), so that each wing (14, 16) is capable to selectively assume a first closed position (P₁, P'₁), and a second open position (P₂, P'₂), **characterised in that** each wing is also capable to assume at least one intermediate position (P₃, P₄, P'₃), realising different access openings (O, O', O") each of them having different sizes.

2. Transport vehicle according to claim 1, wherein said double door (12) is provided at a position which is adjacent to the rear wheels (6') and at the middle position of the vehicle, the small wing (16) of said double door (12) being pivotably turning towards the rear wheels (6').

3. Transport vehicle according to claims 1 or 2, wherein said large wing (14) is movable in two predetermined intermediate positions (P₃, P₄).

4. Transport vehicle according to the preceding claim, wherein said first intermediate position (P₃) of the large wing (14) corresponds to a quarter of the length (L) of said large wing (14), starting from the closed position thereof, and said second intermediate position (P₄) corresponds to a half the length (L) of said large wing, starting from the closed position thereof.

5. Transport vehicle according to any one of the previous claims, wherein said small wing (16) is movable in a single intermediate position between the closed and the fully opened position .

6. Transport vehicle according to the preceding claim, wherein said intermediate position (P'₃) of said small wing (16) corresponds to half of the length (I) of said small wing, starting from the closed position (P'₁) thereof.

7. Transport vehicle according to any one of the previous claims, wherein the length (L) of said large wing (14) corresponds to twice the length (l) of said small wing (16).

8. Transport vehicle according to the preceding claim, wherein the length (L) of the large wing (14) is equal to 1200 mm, whereas the length (l) of the small wing (16) is equal to 600 mm.

9. Transport vehicle according to any one of claims 2 to 8, wherein said transport vehicle further comprises a single front door (8) mounted at the front wheels (4'), the front door (8) not having a middle door.

## Patentansprüche

1. Transportfahrzeug auf Reifen, wie z.B. ein Bus oder Trolleybus, umfassend einen Fahrzeugkörper (2), der mit zumindest einer Vorderachse (4) mit Vorderrädern (4') und zumindest einer Hinterachse (6) mit Hinterrädern (6') versehen ist, wobei das Fahrzeug ferner zumindest eine Zugangstür (8, 12) aufweist, um zumindest eine Öffnung (O, O', O'') für den Zugang zu dem Fahrzeug zu bilden,
wobei die Zugangstür eine Doppeltür (12) mit einem ersten Flügel (14) und einem zweiten Flügel (16), der kleiner als der erste Flügel (14) ist, aufweist, wobei der große Flügel (14) eine Hauptdimension oder Länge (L) hat, die größer als die Hauptdimension oder Länge (l) des kleinen Flügels (16) ist, und wobei sie ferner eine Vorrichtung (18) zum Steuern der Bewegung des ersten und zweiten Flügels (14, 16) aufweist, so dass jeder Flügel (14, 16) dazu geeignet ist, wahlweise eine erste geschlossene Position (P₁, P'₁) und eine zweite geöffnete Position (P₂, P'₂) einzunehmen, **dadurch gekennzeichnet, dass** jeder Flügel ebenfalls dazu geeignet ist, zumindest eine Zwischenposition (P₃, P₄, P'₃) einzunehmen, wodurch verschiedene Zugangsöffnungen (0, 0', O'') realisiert werden, die jeweils unterschiedliche Größen haben.

2. Transportfahrzeug nach Anspruch 1, wobei die Doppeltür (12) an einer Position, die neben den Hinterrädern (6') liegt, und an der Mittelposition des Fahrzeugs vorgesehen ist, wobei der kleine Flügel (16) der Doppeltür (12) drehbar in Richtung der Hinterräder (6') dreht.

3. Transportfahrzeug nach Ansprüchen 1 oder 2, wobei der große Flügel (14) in zwei vorbestimmte Zwischenpositionen (P₃, P₄) bewegbar ist.

4. Transportfahrzeug nach dem vorstehenden Anspruch, wobei die erste Zwischenposition (P₃) des großen Flügels (14) einem Viertel der Länge (L) des großen Flügels (14), beginnend von deren geschlossener Position, entspricht, und die zweite Zwischenposition (P₄) einer Hälfte der Länge (L) des großen Flügels, beginnend von deren geschlossener Position, entspricht.

5. Transportfahrzeug nach einem der vorstehenden Ansprüche, wobei der kleine Flügel (16) in eine einzige Zwischenposition zwischen der geschlossenen und der vollständig geöffneten Position bewegbar ist.

6. Transportfahrzeug nach dem vorstehenden Anspruch, wobei die Zwischenposition (P'₃) des kleinen Flügels (16) der Hälfte der Länge (1) des kleinen Flügels, beginnend von deren geschlossener Position (P'₁), entspricht.

7. Transportfahrzeug nach einem der vorstehenden Ansprüche, wobei die Länge (L) des großen Flügels (14) der doppelten Länge (1) des kleinen Flügels (16) entspricht.

8. Transportfahrzeug nach dem vorstehenden Anspruch, wobei die Länge (L) des großen Flügels (14) gleich 1200mm ist, während die Länge (1) des kleinen Flügels (16) gleich 600mm ist.

9. Transportfahrzeug nach einem der Ansprüche 2 bis 8, wobei das Transportfahrzeug ferner eine einzige Vordertür (8) aufweist, die bei den Vorderrädern (4') angebracht ist, wobei die Vordertür (8) keine Mitteltür aufweist.

## Revendications

1. Véhicule de transport sur pneumatiques, comme un bus ou un trolleybus, comprenant une carcasse de véhicule (2) munie d'au moins un essieu avant (4) ayant des roues avant (4'), et d'au moins un essieu arrière (6) ayant des roues arrière (6'), le véhicule comprenant en outre au moins une porte d'accès (8, 12) pour former au moins une ouverture (O, O', O") pour l'accès au véhicule, dans lequel
ladite porte d'accès est constitué d'une double porte (12) comprenant un premier battant (14) et un second battant (16) plus petit que ledit premier battant (14), le grand battant (14) ayant une dimension principale ou longueur (L) supérieure à la dimension principale ou longueur (I) dudit petit battant (16), et elle comprend en outre un dispositif (18) pour commander le déplacement desdits premier et second battants (14, 16) de sorte que chaque battant (14, 16) peut prendre sélectivement une première position fermée (P₁, P'₁) et une seconde position ouverte (P₂, P'₂), **caractérisé en ce que** chaque battant peut prendre au moins une position intermédiaire (P₃, P₄, P'₃), en réalisant des ouvertures d'accès différentes (O, O', O") ayant chacune des tailles différentes.

2. Véhicule de transport selon la revendication 1, dans lequel ladite double porte est agencée dans une position qui est adjacente aux roues arrière (6') et au niveau de la position médiane du véhicule, le petit battant (16) de ladite double porte (12) tournant de manière pivotante vers les roues arrière (6').

3. Véhicule de transport selon la revendication 1 ou 2, dans lequel ledit grand battant (14) peut être mis dans deux positions intermédiaires prédéterminées (P₃, P₄).

4. Véhicule de transport selon la revendication précédente, dans lequel ladite première position intermédiaire (P₃) du grand battant (14) correspond à un quart de la longueur (L) dudit grand battant (14), à partir de sa position fermée, et ladite seconde position intermédiaire (4) correspond à une moitié de la longueur (L) dudit grand battant, à partir de sa position fermée.

5. Véhicule de transport selon l'une quelconque des revendications précédentes, dans lequel ledit petit battant (16) peut être mis dans une seule position intermédiaire entre la position fermée et la position entièrement ouverte.

6. Véhicule de transport selon la revendication précédente, dans lequel ladite position intermédiaire (P'₃) dudit petit battant (16) correspond à une moitié de la longueur (I) dudit petit battant, à partir de sa position fermée (P'₁).

7. Véhicule de transport selon l'une quelconque des revendications précédentes, dans lequel la longueur (L) dudit grand battant (14) correspond au double de la longueur (I) dudit petit battant (16).

8. Véhicule de transport selon la revendication précédente, dans lequel la longueur (L) du grand battant (14) est égale à 1200 mm, tandis que la longueur (I) du petit battant (16) est égale à 600 mm.

9. Véhicule de transport selon l'une quelconque des revendications 2 à 8, dans lequel ledit véhicule de transport comprend en outre une porte avant unique (8) montée au niveau des roues avant (4'), la porte avant (8) n'ayant pas une porte médiane.
